# EUROPÄISCHE PATENTSCHRIFT

(11) **EP 2 153 288 B1**
(45) Veröffentlichungstag und Bekanntmachung des Hinweises auf die Patenterteilung: **17.04.2013**
(21) Anmeldenummer: 08760460.9
(22) Anmeldetag: 04.06.2008
(51) Int. Cl.: G05B 19/042

(54) **FELDGERÄT**
FIELD DEVICE
APPAREIL DE TERRAIN

(30) Priorität: 04.06.2007 DE 102007026244
(43) Veröffentlichungstag der Anmeldung: 17.02.2010
(73) Patentinhaber: Endress+Hauser GmbH+Co. KG, 79689 Maulburg (DE)
(72) Erfinder: HAMMER, Manfred, 79664 Wehr (DE); SCHROTH, Herbert, 79650 Schopfheim (DE); SPANKE, Dietmar, 79585 Steinen (DE)
(74) Vertreter: Andres, Angelika Maria
(86) Internationale Anmeldenummer: PCT/EP2008/056877
(87) Internationale Veröffentlichungsnummer: WO 2008/148777

(56) Entgegenhaltungen:
- WO-A-02/054162
- US-A1- 2003 195 934

## Beschreibung

Die Erfindung betrifft ein Feldgerät mit einer Vorrichtung zur Erkennung einer Vielzahl von feldgerät-spezifischen Fehlern und zur Generierung von zugehörigen feldgerät-spezifischen Fehlermeldungen, und einer Vorrichtung zur Ausgabe von Fehlermeldungen.

In der industriellen Messtechnik, insb. in der Automatisierungs- und Prozesssteuerungstechnik werden regelmäßig Feldgeräte eingesetzt, die im Prozessablauf Prozessvariablen messen (Sensoren) oder Regelgrößen steuern (Aktoren).

Zu den Feldgeräten zählen z.B. Durchfluss-, Füllstands-, Druck- oder Differenzdruck- und Temperaturmessgeräte. Sie sind in der Regel dezentral in unmittelbarer Nähe der zu messenden oder zu steuernden Prozesskomponente angeordnet, und liefern ein Messsignal, das dem Messwert der erfassten Prozessvariablen entspricht. Die Messsignale der Feldgeräte werden an eine übergeordnete Einheit, z.B. eine zentrale Steuereinheit, wie z.B. eine Warte oder ein Prozessleitsystem, weitergeleitet. In der Regel erfolgt die gesamte Prozessteuerung über die übergeordnete Einheit, die die Messsignale der einzelnen Messgeräte empfängt und auswertet und in Abhängigkeit von deren Auswertung Steuerungssignale für die Aktoren erzeugt, die den Prozessablauf steuern. Auf diese Weise kann beispielsweise ein Durchfluss durch einen Rohrleitungsabschnitt mittels eines steuerbaren Ventils in Abhängigkeit von einem gemessenen Durchfluss eingestellt werden.

Ein einwandfreies und reibungsloses Arbeiten der Feldgeräte ist für die Sicherheit der Anwendungen, in denen sie eingesetzt werden von großer Bedeutung. Entsprechend wird die Funktionsfähigkeit von Feldgeräten genau überwacht und auftretende Fehler werden durch entsprechende Fehlermeldungen, z.B. in Form einer Warnung oder eines Alarms, angezeigt. Vorzugsweise erfolgt die Überwachung durch das Feldgerät selbst, indem das Feldgerät eine Selbstüberwachung und/oder Diagnose ausführt. Hierzu sind Feldgeräte regelmäßig mit einer Vorrichtung zur Erkennung einer Vielzahl von feldgerät-spezifischen Fehlern und zur Generierung von zugehörigen feldgerät-spezifischen Fehlermeldungen ausgestattet. Diese überwacht eine Vielzahl feldgerät-spezifischer Größen und erkennt anhand dieser Größen, ob ein Fehler vorliegt. Hat das Feldgerät einen Fehler erkannt, so wird dieser mittels einer entsprechenden Ausgabevorrichtung angezeigt.

Es gibt eine Vielzahl von Fehlern, die die Feldgeräte erkennen und/oder ableiten können. Die Anzahl dieser Fehler steigt ständig. Eine Ursache hierfür sind verbesserte Signalanalyse- und Speichermöglichkeiten sowie deutlich erhöhte Rechenleistungen heutiger Feldgeräte. Dies geht einher mit einer Verbesserungen insb. im Bereich der Diagnose und der erweiteten Diagnose, durch die immer mehr Fehler erkannt und/oder abgeleitet werden können. Dies ist prinzipiell begrüßenswert, da dadurch ein hohes Maß an Sicherheit und Zuverlässigkeit erzielt werden kann.

Typischer Weise sind in einer konkreten Anwendung, in der das Feldgerät eingesetzt wird, nur ein Teil der zur Verfügung stehenden Fehlermeldungen, relevant. Die anderen sind für die spezielle Anwendung dagegen nicht von Bedeutung. Die Schnittmenge der Fehlermeldungen, die in allen Anwendungen relevant ist, ist dabei erfahrungsgemäß gering. Welche Fehlermeldungen letztendlich relevant sind, hängt dabei sehr stark davon ab, in welcher Anwendung das Feldgerät letztendlich eingesetzt wird. Beispielsweise können mit Ultraschall arbeitende Füllstandsmessgeräte anhand der Dämpfung der Schallwellen feststellen, ob sich Schaum auf der Füllgutoberfläche befindet. In einigen Anwendungen ist Schaumbildung ein wichtiges Ereignis, dass unbedingt erkannt werden muss, um dem Anwender die Möglichkeit zu einem auf Sicherheit ausgerichteten Handeln zu ermöglichen. In anderen Anwendungen ist Schaum auf der Füllgutoberfläche dagegen normal. Während die entsprechende Fehlermeldung für den einen Anwender sehr wichtig ist, ist sie für den anderen Anwender irrelevant.

Aufgrund der Großen Zahl der zur Verfügung stehenden Fehler besteht die Gefahr, dass der Anwender im Betrieb von einer Vielzahl von Fehlermeldungen überschüttet wird, die für seine Anwendung nicht relevant sind. Er ist quasi gezwungen aus der Vielzahl der Fehlermeldungen diejenigen heraus zu sortieren, die für seine Anwendung tatsächlich von Bedeutung sind. Dies birgt die Gefahr, dass relevante Fehlermeldungen übersehen werden.

Es gibt heute bereits Feldgeräte auf dem Markt, bei denen der Anwender die Möglichkeit hat, einzelne Fehlermeldungen, von denen vorab werkseitig bekannt ist, dass sie problematisch sein können, auszuschalten. Beispielsweise wird bei Füllstandsmessgeräten, bei denen die Laufzeit eines elektrischen Signals entlang einer in einen Behälter hinein geführten Sonde gemessen wird, anhand des Echosignals überprüft, ob die Sonde abgebrochen ist. Bei einigen dieser Sonden hat der Anwender die Möglichkeit, die Sonde auf eine gewünschte Länge zu kürzen. Das Gerät würde eine gekürzte Sonde ständig als gebrochene Sonde interpretieren und eine entsprechende Fehlermeldung heraus geben. Daher bieten die Herstellen dem Anwender in diesem Fall die Möglichkeit diese spezielle Fehlermeldung zu unterdrücken.

Bei den meisten Fehlern ist dem Herstellen jedoch nicht bekannt, ob diese letztendlich für den Anwender relevant sind oder nicht. Es besteht daher das Problem, dass möglichst viele Fehler erkannt und durch Fehlermeldungen angezeigt werden müssen, um in allen Anwendungen, in denen das Gerät einsetzbar ist, einen hohes Maß an Sicherheit zu gewährleisten. Auf der anderen Seite gilt es zu verhindern, dass der Anwender von Fehlermeldungen überschüttet wird, die für ihn nicht relevant sind. Bei der Auswahl der Fehler, die angezeigt werden sollen, besteht dabei immer die Gefahr, dass unter Umständen für eine Anwendung sicherheitsrelevante Fehlermeldungen nicht angezeigt werden.

In der US 2003195934 A1 sind Systeme zur Auswahl von Fehler nach vorgegebenen Fehlertypen gezeigt. Ein Fehlerauswahl-Mechanismus erlaubt es dem Anwender, einen oder mehrere Typen von Fehlern aus einer vorgegebenen Menge an Fehlermeldungen und Fehlerbeschreibungen auszuwählen.

In der WO 2002/054162 A1 ist ein rechnergestütztes System zur Ferndiagnose- und Fernkonfiguration einer Feldvorrichtung gezeigt.

Es ist eine Aufgabe der Erfindung ein Feldgerät und ein Verfahren zur Behandlung von dessen Fehlern anzugeben, bei dem nur diejenigen Fehler zur Anzeige gebracht werden, die für die jeweilige Anwendung des Anwenders relevant sind.

Hierzu besteht die Erfindung in einem Feldgerät mit
- einer Vorrichtung zur Erkennung einer Vielzahl von feldgerät-spezifischen Fehlern und zur Generierung von zugehörigen feldgerät-spezifischen Fehlermeldungen,
- einem Speicher, zur Speicherung eines anwendungs-spezifischen Fehlermeldungsprofil, das ausschließlich diejenigen feldgerät-spezifischen Fehler enthält, die für eine bestimmte Anwendung relevant sind,
- einer Schnittstelle,
   -- über die ein Anwender das Fehlermeldungsprofil vorgibt und in dem Speicher ablegt, und
- einer Vorrichtung zur Ausgabe von Fehlermeldungen, die ausschließlich die Fehlermeldungen der im Fehlermeldungsprofil enthaltenen Fehler ausgibt.

Gemäß einer Weiterbildung der Erfindung ist ein Speicher vorgesehen, in dem jedem im Fehlermeldungsprofil enthaltenen Fehler eine vom Anwender vorgegebene Bewertung zugeordnet ist, die die Vorrichtung zur Ausgabe von Fehlermeldungen der im Fehlermeldungsprofil enthaltenen Fehler als Bestandteil der jeweiligen Fehlermeldung ausgibt.

Gemäß einer Ausgestaltung ist die Bewertung eine Statusmeldung,
- die einen Ausfall des Feldgeräts oder eines Teiles davon anzeigt,
- die anzeigt, dass das Ausgangsignal vorübergehend ungültig ist,
- die angibt, dass das Feldgerät außerhalb seiner Spezifikation betrieben wird, oder
- die einen Wartungsbedarf meldet.

Gemäß einer Weiterbildung der Erfindung ist ein Speicher vorgesehen, in dem mindestens ein vorgefertigtes Teilprofil abgelegt ist, dass einen vordefinierten Satz von Fehlern enthält. Der Speicher ist über die Schnittstelle zugänglich, und der Anwender kann jedes Teilprofil in seinem Fehlermeldungsprofil aufnehmen.

Gemäß einer Ausgestaltung umfasst die Schnittstelle eine unmittelbar am Feldgerät angeordnete Bedienoberfläche mit einer Anzeige und einer Eingabevorrichtung.

Gemäß einer Weiterbildung ist ein vom Anwender erstelltes Fehlermeldungsprofil über die Schnittstelle aus dem Speicher auslesbar und auf einen externen Datenträger oder ein baugleiches Feldgerät übertragbar.

Gemäß einer weiteren Weiterbildung sind Teilprofile über die Schnittstelle ins Feldgerät ladbar und dort im Speicher speicherbar.

Weiter besteht die Erfindung in einem Verfahren zur Erstellung und Verwendung eines anwendungs-spezifischen Fehlermeldungsprofils für ein Feldgerät,
- das eine Vorrichtung zur Erkennung einer Vielzahl von feldgerät-spezifischen Fehlern und zur Generierung von zugehörigen feldgerät-spezifischen Fehlermeldungen aufweist, und
- das eine Schnittstelle aufweist, über die ein Anwender ein für seine Anwendung spezifisches Fehlermeldungsprofil definiert,
   -- indem er aus der Vielzahl der feldgerät-spezifischen Fehlermeldungen die für seine Anwendung relevanten Fehler auswählt und in einem für die jeweilige Anwendung spezifischen Fehlermeldungsprofil abspeichert, und
- das Feldgerät nachfolgend ausschließlich die Fehlermeldungen der im Fehlermeldungsprofil enthaltenen Fehler ausgibt.

Weiter besteht die Erfindung in einem Verfahren zur Erstellung und Verwendung eines anwendungs-spezifischen Fehlermeldungsprofils für ein Feldgerät
- das eine Vorrichtung zur Erkennung einer Vielzahl von feldgerät-spezifischen Fehlern und zur Generierung von zugehörigen feldgerät-spezifischen Fehlermeldungen aufweist,
- bei dem zumindest einige der Fehler in mindestens einem vorgefertigten Teilprofil abgelegt sind, dass einen vordefinierten Satz von Fehlern enthält,
   und
- das eine Schnittstelle aufweist, über die ein Anwender ein für seine Anwendung spezifisches Fehlermeldungsprofil definiert,
   -- indem er aus der Vielzahl der feldgerät-spezifischen Fehlermeldungen die für seine Anwendung relevanten Fehlermeldungen einzeln und/oder über die Auswahl von mindestens einem vorgefertigten Teilprofil auswählt und in einem für die jeweilige Anwendung spezifischen Fehlermeldungsprofil abspeichert,
- jeder erstmalig auftretende Fehler dieses Fehlermeldungsprofils angezeigt wird,
- der Anwender beim erstmaligen Auftreten des jeweiligen Fehlers bestimmt, ob dieser Fehler im Fehlermeldungsprofil verbleibt oder ob er aus dem Fehlermeldungsprofil gelöscht und nachfolgend nicht mehr angezeigt wird, und
- das Feldgerät nachfolgend ausschließlich die Fehlermeldungen der im Fehlermeldungsprofil verbleibenden Fehler ausgibt.

Gemäß einer ersten Ausgestaltung des erstgenannten Verfahrens sind zunächst alle feldgerät-spezifischen Fehler im Fehlermeldungsprofil enthalten. Jeder erstmalig auftretende Fehler wird angezeigt, und der Anwender bestimmt beim erstmaligen Auftreten des jeweiligen Fehlers, ob dieser Fehler im Fehlermeldungsprofil verbleibt oder ob er aus dem Fehlermeldungsprofil gelöscht und nachfolgend nicht mehr angezeigt wird.

Gemäß einer Weiterbildung des erstgenannten Verfahrens ordnet der Anwender jedem im Fehlerprofil enthaltenen Fehler eine Bewertung zu. Diese wird im Feldgerät abgespeichert, und beim Auftreten des jeweiligen Fehlers als Bestandteil der den jeweiligen Fehler anzeigenden Fehlermeldung ausgegeben.

Ein Vorteil der Erfindung besteht darin, dass die Feldgeräte mit vom Anwender definierten anwendungs-spezifischen Fehlermeldungsprofil ausgestattet werden, und dem Anwender nachfolgend nur die in diesem Fehlermeldungsprofil enthaltenen Fehler angezeigt werden. Der Anwender kann die im Fehlermeldungsprofil enthaltenen Fehler entweder händisch einzeln vorab auswählen oder dem Feldgerät während des Betriebs nacheinander beibringen, indem er erstmalig auftretende Fehlermeldungen entsprechend quittiert. Alternativ oder zusätzlich kann er hierzu auf vordefinierte Teilprofile zurückgreifen. Dabei wird die Tatsache ausgenutzt, dass das Wissen über Art und Erfordernisse der Anwendung in der ein Feldgerät eingesetzt werden soll beim Anwender vorhanden ist.

Durch die Verwendung von anwendungs-spezifischen Fehlermeldungsprofilen ist gewährleistet, dass dem Anwender ausschließlich diejenigen Fehler angezeigt werden, die für die spezielle Anwendung, in der er das Gerät einsetzen möchte, relevant sind. Dabei steht ihm die volle Auswahl aller vom Feldgerät erkennbaren feldgerät-spezifischen Fehler zur Verfügung. Er kann die volle Bandbreite der erkennbaren feldgerät-spezifischen Fehler nutzen, ohne dass er von für sich bzw. für seine Anwendung unwichtigen Fehlermeldungen überschwemmt wird.

Die Erfindung und weitere Vorteile werden nun anhand der Figur der Zeichnung, in der ein Ausführungsbeispiel dargestellt ist, näher erläutert.

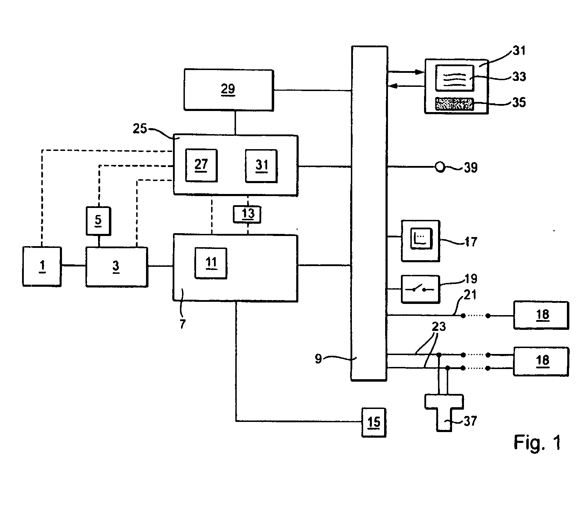

Fig. 1 zeigt ein Blockschaltbild eines erfindungsgemäßen Feldgeräts.

Fig. 1 zeigt ein vereinfachtes Blockschaltbild eines erfindungsgemäßen Feldgeräts. In dem dargestellten Ausführungsbeispiel handelt es sich um ein Messgerät. Die Erfindung ist jedoch nicht auf Messgeräte beschränkt. Sie ist auf völlig analoge Weise auch in anderen Arten von Feldgeräte, z.B. auch in Aktoren, einsetzbar.

Das Messgerät umfasst einen Sensor 1, zur Erfassung einer physikalischen Messgröße, z.B. eines Füllstandes, eines Drucks oder einer Temperatur, der ein der physikalischen Messgröße entsprechendes Sensorsignal erzeugt. An den Sensor 1 ist eine Signalaufbereitung 3 zur Aufbereitung des Sensorsignals angeschlossenen, die das Sensorsignal für eine weitere Verarbeitung und/oder Auswertung aufbereitet. Die Signalaufbereitung 3 kann beispielsweise darin bestehen, dass das Sensorsignal gefiltert, verstärkt und/oder digitalisiert wird. Zusätzlich kann eine Kompensation von Messfehlern, wie z.B. eine Kompensation temperatur-abhängiger Abweichungen vorgenommen werden. Hierzu können beispielsweise in einem Speicher 5 abgelegte Parameter, Kennlinien und/oder Kalibrationsdaten herangezogen werden.

Das aufbereitete Sensorsignal ist einer Signalverarbeitung 7 zugeführt, die anhand des aufbereiteten Sensorsignals die zu messende physikalische Größe bestimmt, und ein entsprechendes Ausgangssignal über eine Ausgabeeinheit 9 des Feldgeräts zur Verfügung stellt.

Die Signalverarbeitung 7 weist vorzugsweise eine elektronische Einheit 11, z.B. einen Mikroprozessor, auf, der das aufbereitete Sensorsignal zugeführt wird.

Die elektronische Einheit 11 bestimmt die zu messende Größe beispielsweise anhand von in einem Speicher 13 abgelegten Berechnungsvorschriften, wobei sie beispielsweise ebenfalls im Feldgerät, z.B. in den Speichern 5 und/oder 13, abgespeicherte Parameter, Kennlinien und/oder Kalibrationsdaten hinzuzieht.

Zusätzlich können der Signalverarbeitung 7 zur Bestimmung der physikalischen Größe weitere Informationen zugeführt werden. Diese Informationen können innerhalb des Feldgeräts abgeleitet werden oder über entsprechende Schnittstellen 15 von außen zugeführt werden. Ein Beispiel hierfür eine solche Information sind zusätzliche Messgrößen oder Stellgrößen, die beispielsweise intern im Feldgerät, z.B. von weiteren Sensoren, abgeleiteten werden, oder über die Schnittstelle 15 von außen zugeführt werden.

Feldgeräte sind heute in Verbindung mit einer Vielzahl verschiedener Arten von Ausgängen auf dem Markt erhältlich. Einige Arten sind in Fig. 1 beispielhaft dargestellt und können sowohl nebeneinander als auch alternativ zueinander vorgesehen sein. Die Ausgabeeinheit 9 umfasst beispielsweise eine Vorortanzeige 17, ein Relais 19, oder Anschlussleitungen 21, 23 über die das Ausgangssignal in analoger oder digitaler Form einer übergeordneten Einheit 18, z.B. einer speicherprogrammierbaren Steuerungen (SPS), einem Prozessleitsystem (PLS) oder einem Personalcomputer (PC) zuführbar ist.

Die Ausgabe eines digitalen Ausgangsignals kann beispielsweise über eine an die Ausgabeeinheit 9 angeschlossene Datenbusleitung, hier die Anschlussleitung 21 erfolgen. Bekannte internationale Standards für diese Art der Signalübertragung sind Profibus, Foundation Fieldbus oder CAN-Bus.

Die Ausgabe von analogen Ausgangssignalen erfolgt sehr häufig über ein an die Ausgabeeinheit 9 angeschlossenes Leitungspaar, hier die beiden Anschlussleitungen 23, über das sowohl die Versorgung des Feldgeräts als auch die Ausgabe des Ausgangsignals erfolgt. Diese Geräte werden häufig als 2-Draht-Geräte bezeichnet. Standardmäßig werden solche Geräte mit Eingangsspannungen von 12 V bis maximal 36 V gespeist und das Feldgerät steuert einen über das Leitungspaar fließenden Strom in Abhängigkeit von einem momentanen Messwert. Das Ausgangssignal ist bei diesen Feldgeräten ein Signalstrom. Gemäß einem in der Mess- und Regeltechnik üblichen Standard wird der Signalstrom in Abhängigkeit von dem momentanen Messwert auf Werte zwischen einem minimalen Signalstrom von 4 mA und einem maximalen Signalstrom von 20 mA eingestellt. Zusätzlich kann dem Signalstrom ein Kommunikationssignal überlagert werden, über das eine bidirektionale Kommunikation mit dem Feldgerät erfolgen kann. Auch hierfür liegen in der Mess- und Regeltechnik übliche Standards, wie z.B. Hart, vor.

Das Feldgerät weist eine Vorrichtung 25 zur Erkennung einer Vielzahl von feldgerät-spezifischen Fehlern und zur Generierung von zugehörigen feldgerät-spezifischen Fehlermeldungen auf. Eine Große Vielzahl solcher feldgerät-spezifischen Fehler ist in der NAMUR-Empfehlung NE107: 'Selbstüberwachung und Diagnose von Feldgeräten' aufgelistet.

Die Vorrichtung 25 kann Bestandteil der Signalverarbeitung 7 sein, sie kann aber auch als eigenständige Einheit ausgebildet sein. Alternativ können natürlich auch mehrere dezentrale Teileinheiten an funktions-relevanten Orten im Feldgerät angeordnet sein, die miteinander verbunden sind. In dem in Fig. 1 dargestellten Ausführungsbeispiel ist sie als eine separate Einheit dargestellt. Sie weist eine Überwachungseinheit 27, z.B. einen Mikroprozessor, auf, der ständig alle für die Erkennung der Fehler erforderlichen Informationen und Daten zugeführt werden. Dies ist in Fig. 1 symbolisch durch die gestrichelt dargestellten Verbindungen dargestellt. Die Informationen und Daten umfassen z.B. intern abgeleitete Größen, wie z.B. Form, Amplitude oder Frequenz des Sensorsignals, Eingangs- oder Ausgangsspannungen einzelner Komponenten des Feldgeräts, aber auch vorgegebene Parameter, wie z.B. Sollwerte für einzelne Kenngrößen, Messbereiche, Schwellwerte, Referenzwerte, Kalibrationsdaten, oder vom Anwender, z.B. im Rahmen der Inbetriebnahmen, vorgegebene Parameter, wie z.B. Angaben zum Messort, z.B. ein maximal zulässiger Füllstand in einem Behälter, oder die Position von Rühnwerken im Behälter.

Die Überwachungseinheit 27 überwacht die ihr zugeführten Daten und Informationen ständig und überprüft ob ein Fehler vorliegt. Hierzu ist eine Vielzahl verschiedener Verfahren einsetzbar. Diese reichen je nach Art des zu erkennenden Fehlers von einem einfachen Vergleich mit einem Referenzwert bis zur Ausführung von äußerst komplexen Überwachungsalgorithmen.

Erfindungsgemäß weist das Feldgerät einen Speicher 29 auf, der dazu dient, ein anwendungs-spezifisches Fehlermeldungsprofil zu speichern. Das anwendungs-spezifische Fehlermeldungsprofil enthält ausschließlich diejenigen feldgerät-spezifischen Fehler, die für eine bestimmte Anwendung relevant sind. Im Feldgerät ist eine Vorrichtung 31 zur Ausgabe von Fehlermeldungen vorgesehen, die ausschließlich die Fehlermeldungen zu den im Fehlermeldungsprofil enthaltenen Fehler ausgibt. Der Inhalt des anwendungs-spezifischen Fehlermeldungsprofils wird vom Anwender definiert. Hierzu weist das Feldgerät eine Schnittstelle 31 auf, über die der Anwender das Fehlermeldungsprofil vorgibt und in dem Speicher 29 ablegt.

Die eigentliche Fehlermeldung ist abhängig von der Art des zu meldenden Fehlers. Vorzugsweise enthält die Fehlermeldung neben der Bezeichnung des Fehlers, z.B. ,starke Schwankung der Amplitude des Messsignals' auch eine Bewertung des Fehlers. Diese Bewertung dient vorzugsweise dazu, dem Anwender Qualität, Bedeutung und/oder Sicherheitsrelevanz des Fehlers anzuzeigen. Ein Beispiel für eine solche Bewertung ist eine dem Fehler zugeordnete Statusmeldung, wie sie in der NAMUR-Empfehlung NE107: 'Selbstüberwachung und Diagnose von Feldgeräten' beschrieben ist. Dort sind vier verschiedene Statusmeldungen empfohlen, nämlich eine erste Statusmeldung, die einen Ausfall des Feldgeräts oder eines Teiles davon anzeigt, eine zweite Statusmeldung, die anzeigt, dass das Ausgangsignals vorübergehend ungültig ist, eine dritte Statusmeldung, die angibt, dass das Feldgerät außerhalb seiner Spezifikation betrieben wird, und eine vierte Statusmeldung, die die einen Wartungsbedarf meldet.

Bei herkömmlichen Feldgeräten wird jedem Fehler werkseitig eine Bewertung zugeordnet, die beim Auftreten des entsprechenden Fehlers als Bestandteil der Fehlermeldung aufgegeben wird. Dies ist jedoch problematisch, da ein und derselbe Fehler, wie bereits erläutert, in unterschiedlichen Anwendungen unterschiedlich zu bewerten sein kann.

Das erfindungsgemäße Feldgerät weist daher vorzugsweise einen Speicher auf, in dem jedem im Fehlermeldungsprofil enthaltenen Fehler eine vom Anwender ausgewählte Bewertung zugeordnet ist, die die Vorrichtung zur Ausgabe der im Fehlermeldungsprofil enthaltenen Fehlermeldungen als Bestandteil der Fehlermeldung auszugeben hat. In dem dargestellten Ausführungsbeispiel wird hierzu der Speicher 29 verwendet. Vorzugsweise ist die Bewertung im Speicher 29 zusammen mit dem jeweiligen Fehler im Fehlermeldungsprofil abgelegt. Diese anwendungs-spezifischen Bewertungen der einzelnen Fehler werden vom Anwender ausgewählt und über die Schnittstelle 31 in dem Speicher 29 abgelegt. Dabei kann dem Anwender entweder die Möglichkeit gegeben werden, die Bewertung inhaltlich selbst zu definieren, oder aus vorformulierten Bewertungen, wie z.B. den vier oben aufgelisteten Statusmeldungen, diejenige auszuwählen, die für seine Anwendung am Besten geeignet ist.

Zusätzlich kann die Fehlermeldung mit einer sicherheitsgerichteten Reaktion des Feldgeräts auf das auftreten des jeweiligen Fehlers verbunden sein, die durch die entsprechende Fehlermeldung im Gerät ausgelöst wird. Beispielsweise kann das Feldgerät beim Auftreten eines Fehlers, der einen Ausfall des Geräts bewirkt, anstelle des das Messeergebnis wiedergebenden Ausgangssignals ein vorgegebenes sicherheitsgerichtetes Signal ausgeben. Bei den oben erwähnten 2-Draht Geräten wird z.B. der Signalstrom auf einen vorgegebenen messwert-unabhängigen Wert, z.B. 3,6 mA oder 22 mA, geregelt.

Die Schnittstelle 31 ist in dem in Fig. 1 dargestellten Ausführungsbeispiel eine unmittelbar am Feldgerät angeordnete Bedienoberfläche mit einer Anzeige 33 und einer Eingabevorrichtung 35, z.B. einem Tastenblock. Die Schnittstelle 31 ist an die Ausgabeeinheit 9 angebunden und erlaubt über die Ausgabeeinheit 9 sowohl eine bidirektionale Kommunikation mit dem Feldgerät, insb. mit der Vorrichtung 25, als auch einen Zugriff auf den zugeordneten Speicher 29. Über diese bidirektionale Verbindung erhält der Anwender Informationen die er zur Erstellung seines anwendungs-spezifischen Fehlermeldungsprofils benötigt und er gibt über diese Verbindung sein anwendungs-spezifisches Fehlermeldungsprofil vor.

Je nach Ausgestaltung des Feldgerätes können aber auch andere Arten von Schnittstellen vorgesehen sein. Vorzugsweise werden hierzu Schnittstellen verwendet, über die das Feldgerät ohnehin verfügt.

Bei Feldgeräten, bei denen die Ausgabeeinheit 9 über Ausgänge verfügt, die eine bidirektionale Kommunikation zwischen dem Feldgerät und der übergeordneten Einheit 18 vorsehen, kann die Schnittstelle beispielsweise in der übergeordneten Einheit 18 integriert sein. Dort ist ohnehin regelmäßig eine Bedienoberfläche mit einer Anzeige und einer Eingabevorrichtung vorgesehen, über die der Anwender mit dem Feldgerät kommuniziert. Der Anwender erhält in diesem Fall über die übergeordnete Einheit 18 die Möglichkeit, ein für seine Anwendung spezifisches Fehlermeldungsprofil auszuwählen und abzuspeichern.

Alternativ eignet sich als Schnittstelle ein mobiles Bedientool 37, dass an die

Anschlussleitungen 23 der Ausgabeeinheit 9 anschließbar ist, und über ein dem Signalstrom überlagertes Kommunikationssignal mit dem Feldgerät kommuniziert.

Die Ausgabe der Fehlermeldung erfolgt vorzugsweise über die Ausgabeeinheit 9. Hierzu kann die Ausgabeeinheit 9 eine separaten Ausgang 39 aufweisen, über den die Fehlermeldungen ausgegeben werden. Sie kann aber auch über den gleichen Ausgang übertragen werden, über den auch das Messsignal übertragen wird, indem sie beispielsweise über die Busleitung 21 ausgegeben wird, oder dem Signalstrom in den Anschlussleitungen 23 in Form eines Kommunikationssignals überlagert wird.

Bei der Erstellung des anwendungs-spezifischen Fehlermeldungsprofils wird derart verfahren, dass der der Anwender über die Schnittstelle 31 aus der Vielzahl der feldgerät-spezifischen Fehlermeldungen die für seine Anwendung relevanten Fehlermeldungen auswählt und in einem für die jeweilige Anwendung spezifischen Fehlermeldungsprofil abspeichert. Das Feldgerät gibt nachfolgend nur noch die im Fehlermeldungsprofil enthaltenen Fehlermeldungen aus. Es genügt, wenn das Feldgerät nachfolgend nur noch das Auftreten der im Fehlermeldungsprofil enthaltenen Fehler überwacht.

Die Auswahl der Fehler und das Abspeichern des anwendungs-spezifischen Fehlermeldungsprofils kann beispielsweise im Rahmen der Inbetriebnahme des Feldgeräts erfolgen. Hierzu kann das Feldgerät in einen Set-up Modus versetzt werden, in dem das Feldgerät dem Anwender über die Schnittstelle 31 nacheinander alle detektierbaren feldgerät-spezifischen Fehler anzeigt, und der Anwender über die Schnittstelle 31 vorgibt, ob dieser in dem Fehlermeldungsprofil abgespeichert werden soll oder nicht. Zusätzlich kann der Anwender zu jedem Fehler, den er im Fehlermeldungsprofil abspeichert, eine zugehörige Bewertung abspeichern, die beim Auftreten des jeweiligen Fehlers als Bestandteil der zugehörigen Fehlermeldung auszugeben ist. Hierzu kann er eine Bewertung aus einer vorgegebenen Auswahl von unterschiedlichen Bewertungen, beispielsweise der oben angeführten von der NAMUR empfohlenen Statusmeldungen, auswählen, oder er kann eine eigene für seine Anwendung besser geeignete Bewertung inhaltlich vorgeben und abspeichern.

Alternativ können bei der Auslieferung des Feldgeräts zunächst alle feldgerät-spezifischen Fehlermeldungen im Fehlermeldungsprofil enthalten sein. Das Feldgerät zeigt dem Anwender jeden erstmalig auftretenden Fehler durch die Ausgabe einer werkseitig vorgegebenen Fehlermeldung an und der Anwender wählt beim erstmaligen Auftreten des jeweiligen Fehlers, ob dieser Fehler im Fehlermeldungsprofil verbleibt oder ob er aus dem Fehlermeldungsprofil gelöscht und nachfolgend nicht mehr angezeigt wird. Hierdurch erlernt das Feldgerät schrittweise das anwendungsspezifische Fehlermeldungsprofil, ohne dass der Anwender vorab alle Fehler einzeln im Fehlermeldungsprofil abspeichern muss. Auch bei diesem Verfahren kann der Anwender zu jedem im Fehlermeldungsprofil verbleibenden Fehler, eine zugehörige Bewertung abspeichern, die beim Auftreten des jeweiligen Fehlers als Bestandteil dieser Fehlermeldung auszugeben ist. Hierzu kann er eine Bewertung aus einer vorgegebenen Auswahl von unterschiedlichen Bewertungen auswählen, oder er kann eine eigene für seine Anwendung besser geeignete Bewertung inhaltlich vorgeben und abspeichern.

Um dem Anwender die Definition und die Abspeicherung seines anwendungsspezifischen Fehlermeldungsprofil zu erleichtern, kann im Feldgerät ein Speicher vorgesehen sein, in dem mindestens ein vorgefertigtes Teilprofil abgelegt ist, dass einen vordefinierten Satz von Fehlern enthält. Dieser Speicher, z.B. der Speicher 29, ist über die Schnittstelle 31 zugänglich und der Anwender hat die Möglichkeit über die Schnittstelle 31 die von ihm gewünschten Teilprofile auszuwählen und die darin enthaltenden Fehler in sein Fehlermeldungsprofil aufzunehmen.

Ein Beispiel für ein solches Teilprofil ist z.B. ein auf Betriebssicherheit ausgerichtetes Profil, in dem alle Fehler zusammengefasst sind, die einen Ausfall des Feldgeräts zur Folge haben.

Ein weiteres Beispiel für ein solches Teilprofil ist z.B. ein branchen-spezifisches Standardprofil, in dem alle üblicherweise in einer bestimmten Branche, z.B. in der Abwasser-Branche, relevanten Fehler zusammengefasst sind.

Diese Teilprofile können werkseitig im Feldgerät abgespeichert werden. Alternativ können diese Teilprofile aber auch über andere Medien, wie z.B. Disketten oder über das Internet, zur Verfügung gestellt werden und über die Schnittstelle 31 ins Feldgerät geladen und abgespeichert werden.

Umgekehrt kann der Anwender ein von ihm erstelltes anwendungs-spezifisches Fehlermeldungsprofil über die Schnittstelle 31 aus dem Speicher 29 auslesen und auf einen externen Datenträger übertragen. Dies bietet den Vorteil, ein einmal erstelltes Fehlermeldungsprofil auf andere baugleiche Feldgeräte übertragen werden kann. Dort kann es entweder als Teilprofil eingesetzt werden, das zu einem vollständigen Fehlermeldungsprofil erweitert wird, oder es kann als vollständiges Fehlermeldungsprofil abgelegt werden.

Selbstverständlich können durch eine entsprechende Auswahl auch anwendungs-spezifische Fehlermeldungsprofile erstellt werden, die mindestens ein Teilprofil und weitere von der Vorrichtung 25 erkennbare Fehler enthalten. Desweiteren kann ein solches Profil nachfolgend optimiert werden. Hierzu wird beispielsweise das nachfolgende Verfahren zur Erstellung und Verwendung eines anwendungs-spezifischen Fehlermeldungsprofils in einem Feldgerät eingesetzt, das eine Vorrichtung 25 zur Erkennung einer Vielzahl von feldgerät-spezifischen Fehlern und zur Generierung von zugehörigen feldgerät-spezifischen Fehlermeldungen aufweist, bei dem zumindest einige der Fehler in mindestens einem vorgefertigten Teilprofil abgelegt sind, dass einen vordefinierten Satz von Fehlern enthält. Bei diesem Verfahren definiert der Anwender über die Schnittstelle 31 ein für seine Anwendung spezifisches Fehlermeldungsprofil, indem er aus der Vielzahl der feldgerät-spezifischen Fehlermeldungen die für seine Anwendung relevanten Fehlermeldungen einzeln und/oder über die Auswahl von mindestens einem vorgefertigten Teilprofil auswählt und in einem für die jeweilige Anwendung spezifischen Fehlermeldungsprofil abspeichert. Nachfolgend wird jeder erstmalig auftretende Fehler dieses Fehlermeldungsprofils angezeigt. Die Optimierung erfolgt dann, indem der Anwender beim erstmaligen Auftreten des jeweiligen Fehlers bestimmt, ob dieser Fehler im Fehlermeldungsprofil verbleibt oder ob er aus dem Fehlermeldungsprofil gelöscht und nachfolgend nicht mehr angezeigt wird. Im Anschluss daran gibt das Feldgerät nachfolgend ausschließlich die Fehlermeldungen der im Fehlermeldungsprofil verbleibenden Fehler aus. Auf diese Weise hat der Anwender die Möglichkeit auf der Basis der von ihm getroffenen Vorauswahl nachträglich diejenigen Fehler zu eliminieren, die sich erst nachträglich als unnötig oder überflüssig herausstellen.

**Tabelle 1**

| Zeichen | Bezeichnung |
|---|---|
| 1 | Sensor |
| 3 | Signalaufbereitung |
| 5 | Speicher |
| 7 | Signalverarbeitung |
| 9 | Ausgabeeinheit |
| 11 | elektronische Einheit |
| 13 | Speicher |
| 15 | Schnittstelle |
| 17 | Vorortanzeige |
| 19 | Relais |
| 21 | Anschlussleitung |
| 23 | Anschlussleitung |
| 25 | Vorrichtung zur Erkennung einer Vielzahl von feldgerät-spezifischen Fehlern und zur Generierung von zugehörigen feldgerät-spezifischen Fehlermeldungen |
| 27 | Überwachungseinheit |
| 29 | Speicher |
| 31 | Vorrichtung zur Ausgabe von Fehlermeldungen |
| 33 | Anzeige |
| 35 | Eingabevorrichtung |
| 37 | Bedientool |
| 39 | Ausgang |

## Patentansprüche

1. Feldgerät mit
- einer Vorrichtung (25) zur Erkennung einer Vielzahl von feldgerät-spezifischen Fehlern und zur Generierung von zugehörigen feldgerät-spezifischen Fehlermeldungen,
- einem Speicher (29), zur Speicherung eines anwendungs-spezifischen Fehlermeldungsprofils, das ausschließlich diejenigen feldgerät-spezifischen Fehler enthält, die für eine bestimmte Anwendung relevant sind,
- einer Schnittstelle (31),
-- über die ein Anwender das Fehlermeldungsprofil vorgibt und in dem Speicher (29) ablegt, und
- einer Vorrichtung (31) zur Ausgabe von Fehlermeldungen, die ausschließlich die Fehlermeldungen der im Fehlermeldungsprofil enthaltenen Fehler ausgibt.

2. Feldgerät nach Anspruch 1, bei dem
ein Speicher (29) vorgesehen ist, in dem jedem im Fehlermeldungsprofil enthaltenen Fehler eine vom Anwender vorgegebene Bewertung zugeordnet ist, die die Vorrichtung (31) zur Ausgabe der im Fehlermeldungsprofil enthaltenen Fehler als Bestandteil der jeweiligen Fehlermeldung ausgibt.

3. Feldgerät nach Anspruch 2, bei dem
die Bewertung eine Statusmeldung ist,
- die einen Ausfall des Feldgeräts oder eines Teiles davon anzeigt,
- die anzeigt, dass das Ausgangsignal vorübergehend ungültig ist,
- die angibt, dass das Feldgerät außerhalb seiner Spezifikation betrieben wird, oder
- die einen Wartungsbedarf meldet.

4. Feldgerät nach Anspruch 1, bei dem
- ein Speicher (29) vorgesehen ist, in dem mindestens ein vorgefertigtes Teilprofil abgelegt ist, dass einen vordefinierten Satz von Fehlern enthält,
- der Speicher (29) über die Schnittstelle (31) zugänglich ist, und
- der Anwender jedes Teilprofil in seinem Fehlermeldungsprofil aufnehmen kann.

5. Feldgerät nach Anspruch 1, bei dem
die Schnittstelle (31) eine unmittelbar am Feldgerät angeordnete Bedienoberfläche mit einer Anzeige (33) und einer Eingabevorrichtung (35) umfasst.

6. Feldgerät nach Anspruch 1, bei dem
ein vom Anwender erstelltes Fehlermeldungsprofil über die Schnittstelle (31) aus dem Speicher (29) auslesbar ist und auf einen externen Datenträger oder ein baugleiches Feldgerät übertragbar ist.

7. Feldgerät nach Anspruch 4, bei dem
Teilprofile über die Schnittstelle (31) ins Feldgerät ladbar und dort im Speicher (29) speicherbar sind.

8. Verfahren zur Erstellung und Verwendung eines anwendungs-spezifischen Fehlermeldungsprofils für ein Feldgerät
- das eine Vorrichtung (25) zur Erkennung einer Vielzahl von feldgerät-spezifischen Fehlern und zur Generierung von zugehörigen feldgerät-spezifischen Fehlermeldungen aufweist, und
- das eine Schnittstelle (31) aufweist, über die ein Anwender ein für seine Anwendung spezifisches Fehlermeldungsprofil definiert,
-- indem er aus der Vielzahl der feldgerät-spezifischen Fehlermeldungen die für seine Anwendung relevanten Fehlermeldungen auswählt und in einem für die jeweilige Anwendung spezifischen Fehlermeldungsprofil abspeichert, und
- das Feldgerät nachfolgend ausschließlich die Fehlermeldungen der im Fehlermeldungsprofil enthaltenen Fehler ausgibt.

9. Verfahren nach Anspruch 8,
- bei dem zumindest einige der Fehler in mindestens einem vorgefertigten Teilprofil abgelegt sind, dass einen vordefinierten Satz von Fehlern enthält,
und
- das eine Schnittstelle (31) aufweist, über die ein Anwender ein für seine Anwendung spezifisches Fehlermeldungsprofil definiert,
- indem er aus der Vielzahl der feldgerät-spezifischen Fehlermeldungen, die für seine Anwendung relevanten Fehlermeldungen einzeln und/oder über die Auswahl von mindestens einem vorgefertigten Teilprofil auswählt und in einem für die jeweilige Anwendung spezifischen Fehlermeldungsprofil abspeichert,
- jeder erstmalig auftretende Fehler dieses Fehlermeldungsprofils angezeigt wird,
- der Anwender beim erstmaligen Auftreten des jeweiligen Fehlers bestimmt, ob dieser Fehler im Fehlermeldungsprofil verbleibt oder ob er aus dem Fehlermeldungsprofil gelöscht und nachfolgend nicht mehr angezeigt wird, und
- das Feldgerät nachfolgend ausschließlich die Fehlermeldungen der im Fehlermeldungsprofil verbleibenden Fehler ausgibt.

10. Verfahren nach Anspruch 8, bei dem
- zunächst alle feldgerät-spezifischen Fehlermeldungen im Fehlermeldungsprofil enthalten sind,
- jeder erstmalig auftretende Fehler angezeigt wird, und
- der Anwender beim erstmaligen Auftreten des jeweiligen Fehlers bestimmt, ob dieser Fehler im Fehlermeldungsprofil verbleibt oder ob er aus dem Fehlermeldungsprofil gelöscht und nachfolgend nicht mehr angezeigt wird.

11. Verfahren nach Anspruch 8, bei dem der Anwender jedem im Fehlerprofil enthaltenen Fehler eine Bewertung zuordnet, die im Feldgerät abgespeichert wird, und die beim Auftreten des jeweiligen Fehlers als Bestandteil der den jeweiligen Fehler anzeigenden Fehlermeldung ausgegeben wird.

## Claims

1. Field device with
- a unit (25) for detecting a wide range of field-device-specific errors and for generating associated field-device-specific error messages,
- a memory (29) for saving an error message profile specific to an application, said profile only containing the field-device-specific error messages that are relevant for a certain application
- an interface (31)
-- via which a user specifies the error message profile and stores it in the memory (29), and
- a unit (31) for outputting error messages that only outputs the error messages of the errors contained in the error message profile.

2. Field device as claimed in Claim 1, wherein
a memory (29) is provided in which every error in the error message profile is assigned a specific rating, specified by the user, which the unit (31) for outputting the errors in the error message profile outputs as a part of the specific error message.

3. Field device as claimed in Claim 2, wherein
the rating is a status message
- that indicates the failure of the field device or a part thereof
- that indicates that the output signal is temporarily invalid
- that indicates that the field device is being operated outside of specifications, or
- that reports a need for maintenance.

4. Field device as claimed in Claim 1, wherein
- a memory (29) is provided in which at least one ready-made subprofile is stored, said subprofile containing a predefined set of errors,
- the memory (29) is accessible via the interface (31), and
- the user can accept every subprofile into the user's error message profile.

5. Field device as claimed in Claim 1, wherein
the interface (31) comprises a user interface, arranged directly on the field device, with a display (33) and an input unit (35).

6. Field device as claimed in Claim 1, wherein
an error message profile created by the user can be read out of the memory (29) via the interface (31) and can be transferred to an external data carrier or a field device identically constructed.

7. Field device as claimed in Claim 4, wherein
subprofiles can be loaded into the field device via the interface (31) and can be saved there in the memory (29).

8. Method to create and use an application-specific error message profile for a field device
- which has a unit (25) for detecting a wide range of field-device-specific errors and for generating associated field-device-specific error messages, and
- that has an interface (31) via which a user defines a specific error message profile for his/her application by selecting from the range of field-device-specific error messages the error messages that are relevant for his/her application and by saving these in an error message profile specific to the particular application, and
- the field device subsequently only outputs the error messages of the errors contained in the error message profile.

9. Method as claimed in Claim 8,
- wherein at least some of the errors are saved in at least one ready-made subprofile which contains a predefined set of errors, and
- that has an interface (31) via which a user defines a specific error message profile for his/her application by selecting from the range of field-device-specific error messages the error messages that are relevant for his/her application either individually and/or by selecting at least one ready-made subprofile and by saving these in an error message profile specific to the particular application, - every error in this error message profile is displayed when it occurs for the first time
- when the particular error occurs for the first time, the user determines whether this error remains in the error message profile or whether it should be deleted from the error message profile and then no longer displayed afterwards, and
- the field device subsequently only outputs the error messages of the errors remaining in the error message profile.

10. Method as claimed in Claim 8, wherein
- initially all the field-device-specific error messages are contained in the error message profile
- every error is displayed the first time the error occurs
- when the particular error occurs for the first time, the user determines whether this error remains in the error message profile or whether it should be deleted from the error message profile and then no longer displayed afterwards.

11. Method as claimed in Claim 8, wherein the user assigns a rating to each error in the error profile, this rating being saved in the field device and being output as part of the error message that displays the error when the error in question occurs.

## Revendications

1. Appareil de terrain avec
- un dispositif (25) destiné à la détection d'un grand nombre d'erreurs spécifiques à l'appareil de terrain et à la génération de messages d'erreur spécifiques à l'appareil de terrain correspondants,
- une mémoire (29) destinée à mémoriser les profils de message d'erreur spécifiques aux applications, laquelle mémoire contient exclusivement les erreurs spécifiques à l'appareil de terrain, qui sont pertinentes pour une application déterminée,
- une interface (31),
-- par l'intermédiaire de laquelle un utilisateur spécifie le profil de messages d'erreur et l'enregistre dans la mémoire (29), et
- un dispositif (31) destiné à l'émission de messages d'erreur, qui émet exclusivement les messages d'erreur associés aux erreurs contenues dans le profil de messages d'erreur.

2. Appareil de terrain selon la revendication 1, pour lequel
est prévue une mémoire (29), dans laquelle est attribuée, à chaque erreur contenue dans le profil de messages d'erreur, une évaluation prédéfinie par l'utilisateur, que le dispositif (31) émet, en vue de l'émission des erreurs contenues dans le profil de messages d'erreur, en tant que partie intégrante du message d'erreur respectif.

3. Appareil de terrain selon la revendication 2, pour lequel
l'évaluation est un message d'état,
- qui affiche une panne de l'appareil de terrain ou d'une partie de l'appareil,
- qui affiche que le signal de sortie est temporairement non valable,
- qui indique que l'appareil de terrain est utilisé en dehors de ses spécifications, ou
- qui signale un besoin de maintenance.

4. Appareil de terrain selon la revendication 1, pour lequel
- est prévue une mémoire (29), dans laquelle est mémorisé au moins un profil partiel préfabriqué, qui contient un jeu prédéfini d'erreurs,
- est accessible à travers l'interface (31) la mémoire (29), et
- l'utilisateur peut enregistrer chaque profil partiel dans son profil de messages d'erreur.

5. Appareil de terrain selon la revendication 1, pour lequel
l'interface (31) comporte une interface utilisateur, disposée directement sur l'appareil de terrain, avec un dispositif d'affichage (33) et un dispositif d'entrée (35).

6. Appareil de terrain selon la revendication 1, pour lequel
un profil de messages d'erreur créé par l'utilisateur peut être lu à travers l'interface (31) à partir de la mémoire (29) et peut être transféré sur un support de données externe ou un appareil de terrain de conception identique.

7. Appareil de terrain selon la revendication 4, pour lequel
des profils partiels peuvent être chargés par le biais de l'interface (31) dans l'appareil de terrain et mémorisé dans la mémoire (29).

8. Procédé destiné à la création et à l'utilisation d'un profil de messages d'erreur spécifique à l'application pour un appareil de terrain
- qui présente un dispositif (25) destiné à la détection d'un grand nombre d'erreurs spécifiques à l'appareil de terrain et à la génération de messages d'erreur spécifiques à l'appareil de terrain correspondants, et
- qui présente une interface (31), par l'intermédiaire de laquelle un utilisateur définit un profil de messages d'erreur spécifique à l'application,
-- en ce qu'il sélectionne à partir du grand nombre de messages d'erreur spécifique à l'appareil de terrain les messages d'erreur pertinents pour son application et les enregistre dans un profil de messages d'erreur spécifique à l'application, et
- l'appareil de terrain émet ensuite uniquement les messages d'erreur associés aux erreurs contenues dans le profil de messages d'erreur.

9. Procédé selon la revendication 8,
- pour lequel au moins certaines parmi les erreurs sont enregistrées dans un profil partiel préfabriqué, qui contient un jeu prédéfini d'erreurs, et
- qui présente une interface (31), par l'intermédiaire de laquelle un utilisateur définit un profil de messages d'erreur spécifique à son application,
-- en ce qu'il sélectionne, à partir du grand nombre de messages d'erreur spécifique à l'appareil de terrain, les messages d'erreur pertinents pour son application, un à un et/ou via la sélection d'au moins un profil partiel préfabriqué, et les enregistre dans un profil de messages d'erreur spécifique à l'application respective,
- chaque erreur apparaissant pour la première fois de ce profil de messages d'erreur est affichée,
- l'utilisateur détermine, lors de la première apparition de l'erreur respective, si cette erreur est conservée dans le profil de messages d'erreur ou si elle doit être supprimée du profil de messages d'erreur et ne plus être affichée par la suite,
- l'appareil de terrain émet ensuite exclusivement les messages d'erreur associés aux erreurs demeurant dans le profil de messages d'erreur.

10. Procédé selon la revendication 8, pour lequel
- dans un premier temps, tous les messages d'erreur spécifiques à l'appareil de terrain sont contenus dans le profil de messages d'erreur,
- chaque erreur apparaissant pour la première fois est affichée, et
- l'utilisateur détermine, lors de la première apparition de l'erreur respective, si cette erreur est conservée dans le profil de messages d'erreur ou si elle doit être supprimée du profil de messages d'erreur et ne plus être affichée par la suite.

11. Procédé selon la revendication 8, pour lequel l'utilisateur attribue une évaluation aux erreurs contenues dans le profil d'erreurs, laquelle évaluation est enregistrée dans l'appareil de terrain, et qui à l'apparition de l'erreur respective, est émise en tant que partie intégrante du message d'erreur affichant l'erreur respective.
